# EUROPEAN PATENT SPECIFICATION

(11) **EP 1 690 754 B1**
(45) Date of publication and mention of the grant of the patent: **15.12.2010**
(21) Application number: 06250694.4
(22) Date of filing: 09.02.2006
(51) Int. Cl.: B60R 22/12, A62B 35/00

(54) **Vehicle seat belt attachment**
Vorrichtung zur Befestigung an einem Fahrzeugsicherheitsgurt
Dispositif d'attaché à une ceinture de sécurité pour véhicule

(30) Priority: 10.02.2005 GB 0502709
(43) Date of publication of application: 16.08.2006
(73) Proprietor: Weston, Walter Stephen, Bury Lancashire BL9 6QF (GB)
(72) Inventor: Weston, Walter Stephen, Bury Lancashire BL9 6QF (GB)
(74) Representative: Barker, Rosemary Anne

(56) References cited:
- DE-A1- 4 236 055
- US-A- 3 321 247
- US-A- 5 042 838
- US-B1- 6 309 024

## Description

The invention relates to a vehicle seat belt assembly which eliminates the need for a seat belt oblique portion (also referred to as a diagonal section) to fit across the chest and stomach of a wearer, whilst still affording the same or similar level of protection as standard seat belts in the instance of rapid deceleration.

The wearing of seat belts whilst travelling in a car is compulsory in many countries and advised in almost all. There are several types approved, with the standard, in terms of type and numbers used, being the inertia reel seat belt, which generally has two fixed points to the side of the wearer and a quick release clasp on the opposite side so as to define, when the belt it is fastened to the clasp, a lap portion and an upper oblique portion. This type of seat belt gives some upper body freedom of movement when the inertia reel mechanism is not engaged and has generally proved very effective in reducing the severity of accidents in cars to the wearer, as opposed to when no belt is worn.

However, the fact that the upper oblique (or diagonal) part of the seat belt, which restrains the upper body of the wearer, crosses the stomach and chest of the wearer can cause discomfort, particularly to pregnant women or people with chest complaints. In severe incidents the belt can harm unborn foetuses during rapid deceleration.

There have been several prior proposals, for example as disclosed in JP 20000302005, JP2000335365 and EP 1138560 A, for child safety harnesses which are intended to be secured to a conventional inertia reel seat belt by passing both sections of the seat belt, namely both the upper oblique (or diagonal) section and the lap section, through the back of the harness behind the wearer. These would not provide adequate restraint for an adult vehicle driver or vehicle passenger.

DE 4236055 A1 discloses a vehicle seat belt assembly comprising a belt extending between upper and lower fixed points at one side of a vehicle seat and a fastener mounted on the belt for attachment to a further fixed point at the opposite side of the vehicle seat so as to define, in the belt, a lap portion and an upper oblique portion, and a harness having a main strap for fitting around the back and chest of a wearer and shoulder straps for fitting over shoulder regions of a wearer, in which respect a back portion of the harness passes behind the upper oblique portion of the belt.

As used in this specification, the term "back portion" means any portion of the harness which is intended, in use, to extend around and overlie the back of a wearer of the harness.

The present invention is distinguished by the features specified in the characterising portion of claim 1.

In a preferred practical embodiment the harness includes a pliable web connector which is mounted on the inside face of the back portion of the harness and incorporates a finger beneath which the belt can be slidingly entrained and a main strap that passes, substantially horizontally, around the back of a wearer and chest, and is closed by a metal plate fixedly mounted on one end of the strap engaging into a quick release clasp of known design that is fixedly mounted on the other end of the strap together with two additional straps that are mounted either at separate spaced apart points or from a common central location on the back portion of the main strap. These additional straps are designed to be worn over respective shoulders of the wearer. Each additional strap has a metal plate fixedly mounted on its free end which is securable into the same quick release clasp of known design that fastens the main strap at the front of the wearer's chest. Thus the four ends of the harness straps are brought together and fastened at a single point by the quick release clasp of known design. Adjustment buckles of known design (such as those sold under the trade name "Ladderlock") may be fitted on each of the shoulder straps and on the main strap, allowing for tensioning of the harness when the front clasp is fastened, and to enable the harness to be adjusted to suit the wearer for optimum comfort and efficacy.

The harness is fitted only to the upper portion of the inertia reel seat belt which in conventional use of the seat belt extends obliquely across the wearer from the upper of the two fixed points to the quick release clasp at the other side of the seat. The inside face of the back portion of the main strap of the harness carries a connector for this purpose, i.e. for attachment of the oblique seat belt portion.

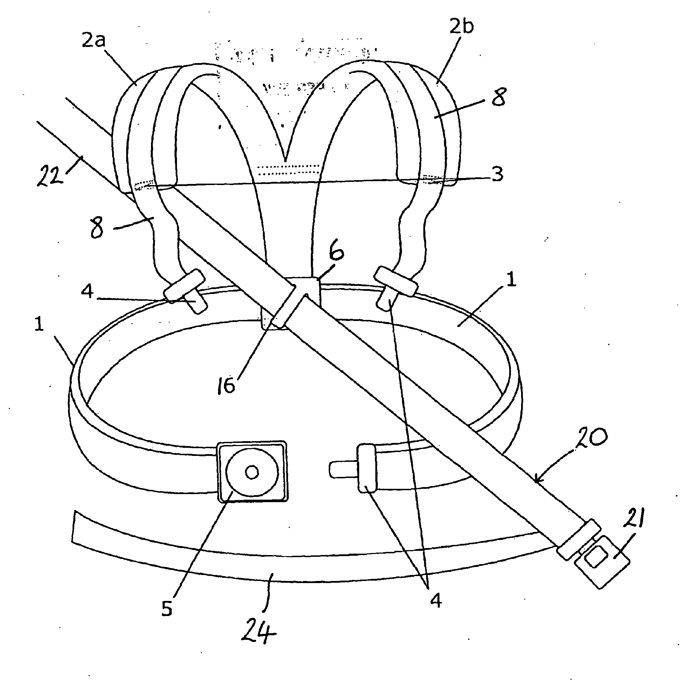

A specific embodiment of the invention will now be described, by way of example, with reference to the accompany drawing in which the single figure is a schematic perspective view showing how a practical embodiment of the harness of the invention is attached to a conventional inertia reel vehicle seat belt.

Firstly, the conventional seat belt 20 is illustrated in a position where its clasp 21 is pulled across to fasten at the other side of a seat, thereby defining an upper oblique portion 22 and a lap portion 24.

The exemplary harness in accordance with the invention comprises a main strap 1 having at its one end a metal plate 4 and at its other end a quick release clasp 5, of any suitable known design, with which the plate 4 is engageable. A pair of shoulder straps 2a, 2b are attached to and extend from a central location of the main strap 1. These shoulder straps 2a, 2b also have respective plates 4, 4 at their free ends which are engageable with the clasp 5. Accordingly, there is a common attachment point for the straps 1, 2a, 2b at the clasp 5.

The main strap 1 is preferably formed by webbing which is encapsulated in a pre-formed pliable polymer, e.g. foamed plastics material, which is fabricated so as to have inherent curvature. Alternatively, the main strap 1 may comprise the pre-formed curved foamed material to which additional padding or webbing is connected. Similarly, the shoulder straps 2a, 2b are also preferably formed as a single piece of foamed plastics material such that each of the branches forming the portions which extend over the shoulders have appropriate inherent curvature. Additional webbing straps 8, as shown, may be secured to the foamed plastics material of the shoulder straps 2 by adhesive or stitching 3 or both, or may even be encapsulated within the foamed material. The curvature of the foamed material of the straps 1, 2 ensures that in use, once the harness is attached to the seat belt 20 and placed behind the wearer, these straps 1, 2a, 2b will tend to curl around the body of the wearer so that the plates 4 at their respective ends are brought to a convenient position for securing into the clasp 5.

A pliable web connector 6 is mounted at the back of the harness, i.e. it is mounted on the inner face of the harness which will lie against the back of the wearer with the main strap 1 and the shoulder straps 2a, 2b curling around the wearer's body. The connector 6 is mounted at a central position at the back of the main strap 1, where the shoulder straps 2 join the main strap 1. The connector 6 is preferably of a high friction rubber or synthetic rubber material which is sufficiently hard to retain its shape yet soft enough to deform under impact or strain without harming the wearer and which is comfortable against the wearer's back. An elongate tab in the manner of a finger 16 is cut or punched from the connector web 6 and is of sufficient length to extend across the width of a conventional seat belt 20. As shown, the connector web 6 is substantially square and the finger 16 is formed diagonally across it.

In use, a wearer sits in a vehicle seat and puts on his/her standard inertia reel seat belt 20 in the approved manner. The wearer then take the harness and passes the main strap 1 behind the diagonal section 22 of the inertia reel seat belt 20 and also engages the diagonal section 22 behind the finger 16 of the connector 6, as shown in the drawing. Although the finger 16 should prevent any substantial sideways movement of the belt, the belt section 22 should be readily slidable behind the finger 16 in the direction of the belt so that the wearer can adjust the level of the harness, for example so that the main strap 1 is at a height that lies under the wearer's breasts and above the stomach. The wearer then passes both the diagonal section 22 of the seat belt 20 and the harness behind his/her back and puts on the harness. In this respect, it has already been mentioned that the straps 1, 2a, 2b will tend if naturally to curl around the wearer's body so that the three fastener plates 4 are brought together at a central point at the front of the wearer's chest and secured there by engagement into the quick release clasp 5, thus forming a closed harness structure.

Adjustment buckles (not shown) may be provided on the shoulder straps 2a and 2b and the main strap 1. These can be pulled comfortably tight to make sure the straps pass correctly around the shoulders and chest of the wearer.

The wearer is now in a position where the standard car seat belt 20 is correctly fastened in its designed geometry, with the lap strap section 24 functioning as normal. The slack in the diagonal section 22 is taken up as normal by the inertia reel and the inertia reel functionality is not compromised. The wearer is then wearing a snug fitting shoulder harness connected to the diagonal section 22 of the car seat belt 20, without the encumbrance of the diagonal strap 22 across his/her stomach, chest and shoulder. In the event of rapid deceleration, the inertia reel locks the seat belt 20 in the normal manner, the lap strap section 24 restrains the wearer by the thighs and the upper body is restrained by the shoulder harness being held securely by the diagonal section 22 of the seat belt 20. Thus the deceleration force will be spread across the lap strap section 24 via the seat belt and across the shoulders and upper chest via the harness. No force is transmitted to the wearer's stomach by the diagonal of the seat belt.

The foregoing is illustrative and not limitative of the scope of the invention and many other variations in the detail of the harness are possible in other embodiments. In particular the type or style of fasteners or clasps used for securing the ends of the main strap or front straps at the front of the wearer and for securing any shoulder straps are not critical to the invention. These can be selected from any commercially available style in order to meet safety and aesthetic requirements.

The means of attachment of the back portion of the harness to the oblique section of the conventional seat belt may also vary. For example, the connector 6 could be modified to include a T-shaped enlargement or inverted flap at the end of the finger 16 to retain the oblique portion 22 of the seat belt 20 more securely, yet still slidably. Also, a press stud formation could be provided near the free end of the finger 16 for the same purpose.

Simplicity of manufacture, ease of use and comfort are the primary considerations and the overall style and configuration of the harness may vary from that shown in the illustrated example.

Although the harness and harness assembly of the invention are specifically envisaged as being attractive for use by pregnant women, they are also suitable for use by any vehicle driver or passenger who finds the diagonal section of a conventional seat belt causes discomfort. They may be particularly useful for child passengers whether or not they are sitting on booster seats or cushions.

## Claims

1. A vehicle seat belt assembly comprising a belt (20) extending between upper and lower fixed points at one side of a vehicle seat and a fastener mounted on the belt for attachment to a further fixed point at the opposite side of the vehicle seat so as to define, in the belt, a lap portion (24) and an upper oblique portion (22), and a harness having a main strap (1) for fitting around the back and chest of a wearer and shoulder straps (2a, 2b) for fitting over shoulder regions of a wearer, in which respect a back portion of the harness passes behind the oblique portion (22) of the belt (20), **characterised in that** the harness includes a pliable web connector (6) which is mounted on the inside face of the back portion of the harness and incorporates a finger (16), beneath which the belt (20) can be slidingly entrained and the harness is attached by means of said connector (6) to the upper oblique portion (22) of the belt at the location where the back portion of the harness passes behind the oblique portion (22) of the belt while the lap portion (24) of the belt is not attached to nor passed through the harness but remains available for fitting across and restraining the body of the wearer in customary manner.

2. An assembly according to claim 1 wherein the shoulder straps (2a, 2b) of the harness have an inherent curving configuration.

3. An assembly according to any of claims 1 or 2 wherein the main strap (1) has an inherent curving configuration.

4. An assembly according to any preceding claim wherein a releasable fastener device is provided at one end of the main strap and the opposing free end of the main strap and free ends of the respective shoulder straps are all connectable to said fastener device.

5. A harness adapted for attachment to a vehicle seat belt to provide an assembly as claimed in any preceding claim.

## Patentansprüche

1. Fahrzeugsicherheitsgurtbaugruppe mit einem Gurt (20), der sich zwischen oberen und unteren festen Punkten auf einer Seite eines Fahrzeugsitzes erstreckt, und einem Befestiger, der an dem Gurt befestigt ist, zur Befestigung an einem weiteren festen Punkt auf der entgegengesetzten Seite des Fahrzeugsitzes, um so in dem Gurt einen Überlappungsteil (24) und einen oberen schrägen Teil (22) zu bilden, und einem Harnisch, der ein Hauptband (1) hat zum Herumlegen um den Rücken und die Brust eines Trägers und Schulterbänder (2a, 2b), welche über Schulterbereiche eines Trägers passen, wobei ein hinterer Teil des Harnischs hinter dem schrägen Teil (22) des Gurtes (20) vorbeigeht, **dadurch gekennzeichnet, dass** der Harnisch einen biegsamen Stegverbinder (6) aufweist, der auf der Innenseite des Rückenteils des Harnischs befestigt ist und einen Finger (16) aufweist, unter welchem der Gurt (20) verschiebbar hindurchgeführt werden kann, und dass der Harnisch mit Hilfe des Verbinders (6) an dem oberen schrägen Teil (22) des Gurtes an der Stelle befestigt ist, wo der Rückenteil des Harnischs an dem schrägen Teil (22) des Gurtes hindurchgeht, wohingegen der Überlappungsteil (24) des Gurtes weder an dem Harnisch befestigt noch durch den Harnisch hindurchgeführt ist, sondern verfügbar bleibt zum Hinwegführen über den Körper des Trägers und zum Zurückhalten desselben auf übliche Art und Weise.

2. Baugruppe nach Anspruch 1, wobei die Schulterbänder (2a, 2b) des Harnischs eine von Haus aus gekrümmte Konfiguration haben.

3. Baugruppe nach Anspruch 1 oder 2, wobei das Hauptband (1) eine von Haus aus gekrümmte Konfiguration hat.

4. Baugruppe nach einem der vorhergehenden Ansprüche, wobei eine lösbare Befestigungsvorrichtung an einem Ende des Hauptbandes vorhanden ist, und wobei das entgegengesetzte freie Ende des Hauptbandes und die freien Enden der Schulterbänder alle mit der Befestigungsvorrichtung verbindbar sind.

5. Harnisch, ausgebildet zur Befestigung an einem Fahrzeugsicherheitsgurt, zum Bilden einer Baugruppe nach einem der vorhergehenden Ansprüche.

## Revendications

1. Ensemble de ceinture de sécurité de véhicule comprenant une ceinture (20) s'étendant entre des points fixes supérieur et inférieur au niveau d'un côté d'un siège de véhicule et une fixation montée sur la ceinture pour la fixation à un autre point fixe au niveau du côté opposé du siège de véhicule afin de définir, dans la ceinture, une partie ventrale (24) et une partie oblique supérieure (22), et un harnais ayant une sangle principale (1) pour s'adapter autour du dos et la poitrine d'un utilisateur et des sangles d'épaule (2a, 2b) pour s'adapter sur les régions d'épaule d'un utilisateur, par rapport auquel une partie arrière du harnais passe derrière la partie oblique (22) de la ceinture (20), **caractérisé en ce que** le harnais comprend un connecteur de bande pliable (6) qui est monté sur la face interne de la partie arrière du harnais et comprend un doigt (16), au-dessous duquel la ceinture (20) peut être entraînée de manière coulissante et le harnais est fixé au moyen dudit connecteur (6) sur la partie oblique supérieure (22) de la ceinture à l'emplacement où la partie arrière du harnais passe derrière la partie oblique (22) de la ceinture alors que la partie ventrale (24) de la ceinture n'est pas fixée et ne passe pas non plus à travers le harnais, mais reste disponible pour s'installer sur et retenir le corps de l'utilisateur d'une manière personnalisée.

2. Ensemble selon la revendication 1, dans lequel les sangles d'épaule (2a, 2b) du harnais ont une configuration incurvée inhérente.

3. Ensemble selon l'une quelconque des revendications 1 ou 2, dans lequel la sangle principale (1) a une configuration incurvée inhérente.

4. Ensemble selon l'une quelconque des revendications précédentes, dans lequel un dispositif de fixation amovible est prévu au niveau d'une extrémité de la sangle principale et l'extrémité libre opposée de la sangle principale et les extrémités libres des sangles d'épaule respectives peuvent toutes se raccorder audit dispositif de fixation.

5. Harnais adapté pour la fixation à une ceinture de sécurité de voiture pour fournir un ensemble selon l'une quelconque des revendications précédentes.
